# EUROPEAN PATENT SPECIFICATION

(11) **EP 1 346 592 B1**
(45) Date of publication and mention of the grant of the patent: **09.05.2007**
(21) Application number: 00987458.7
(22) Date of filing: 22.12.2000
(51) Int. Cl.: H04Q 7/38, H04Q 3/00, H04M 15/00

(54) **MANAGEMENT OF CALLS TO A ROAMING SUBSCRIBER**
VERWALTUNG VON ANRUFEN ZU EINEM UMHERSTREIFENDEN TEILNEHMER
GESTION DES APPELS VERS UN ABONNE ITINERANT

(43) Date of publication of application: 24.09.2003
(73) Proprietor: Nokia Corporation, 02150 Espoo (FI)
(72) Inventor: LEPPÄNEN, Eva-Maria, c/o Nokia Networks Oy, FIN-02150 Espoo (FI); PALKOLA, Jani, c/o Nokia Networks Oy, FIN-02150 Espoo (FI); PARTANEN, Veijo, c/o Nokia Networks Oy, FIN-02150 Espoo (FI); MALK, Kirsi, c/o Nokia Networks Oy, FIN-02150 Espoo (FI); PITKÄNEN, Risto, A., c/o Nokia Networks Oy, FIN-02150 Espoo (FI); RISSANEN, Jenni, c/o Nokia Networks Oy, FIN-02150 Espoo (FI); TUUNANEN, Timo, I., c/o Nokia Networks Oy, FIN-02150 Espoo (FI)
(74) Representative: TBK-Patent
(86) International application number: PCT/EP2000/013249
(87) International publication number: WO 2002/052880

(56) References cited:
- EP-A- 0 676 884
- WO-A-98/59504
- DE-A- 19 515 418
- "WAP White Paper" AU-SYSTEM RADIO, [Online] February 1999 (1999-02), XP002901226 Retrieved from the Internet: <URL:http://www.wapguide.com/>

## Description

The present invention relates to a method for controlling the establishment of a connection between two communication terminals, wherein one of the communicating terminals is roaming.

The present invention concerns the situation when a subscriber is abroad and roaming in a foreign network. Roaming in a foreign or visited network always involves extra costs, i.e., roaming fees for a telephone call. When, for example, a subscriber B is roaming in a foreign network and another subscriber A calls B, there is a problem to decide who has to pay the roaming fee. Presently, in GSM the called subscriber B has to pay the additional roaming fee. This is because the calling subscriber possibly does not know that the subscriber B is abroad. Therefore, he can not be expected to pay the extra fees.

However, these extra roaming fees can be very high. The cost for merely pressing the answer button can sometimes be very expensive, as in some places there is a minimum charge of 1 minute per call and a roaming charge (international leg) of even € 2 per minute.

Usually, caller identification (e.g. caller number) is not available when roaming or, in case the caller number is available, the subscriber B does not recognise it.

Therefore, the called subscriber B located abroad is not able to distinguish who is calling him. In this situation it is very annoying for the called subscriber when he is called by someone calling to the wrong number or by an advertiser.

Thus, if a person does not want to or is not able to spend a lot of money for the extra roaming fees, he will not answer the incoming calls or he even chooses to switch off his mobile terminal when travelling abroad, even though his mobile terminal may be globally compatible. That is, he cannot answer important calls. Hence, due to the rigid charging system, the advantages of mobile communication are ruined.

Document DE 195 15 418 A1 discloses a method, a system and a communication terminal as defined in the respective independent claims. In particular, this document discloses a calling method including the step of detecting if a called mobile subscriber is located in a another radio network than the network in which the calling subscriber is located. If the subscribers are in different networks, a signal is transmitted back to the calling subscriber for indicating a higher call tariff due to roaming.

The object underlying the invention resides in removing the above drawbacks of the prior art and to enable a possibility of being reachable when roaming in other networks without having to pay additional roaming fees.

This obj ect is solved by a method as set out in claim 1 or 2, by a system as set out in claim 10 or 11, or alternatively by a communication terminal as set out in claim 19.

Thus, a person is able to roam abroad and can be reachable although he does not want to pay expensive roaming calls.

The above two methods as described in claims 1 and 2, or the measures as described in claims 10 and 11 can also be combined. That is, both of the users can be asked by the service how a call is to be handled in case one of the users is roaming.

Further advantageous developments are set out in the dependent claims.

For example, the call handling option which can be selected by the subscribers may comprise indicating of paying the cost of international roaming. That is, one of the subscriber may indicate to the other subscriber that he is willing to pay the roaming costs.

The checking step may be performed by a Service Control Point (SCP).

The informing and selecting steps may be performed using Wireless Telephony Application (WTA) functionality. In particular, the corresponding control can be performed by a Wireless Telephony Application (WTA) server or by an IN/WTA server (IN: Intelligent Network). Thus, the specific features of Wireless Application Protocol (WAP) and WTA can be used.

Alternatively, informing and selecting may be controlled by using Simple Retransmission Protocol (SRP). This is not effective as WAP/WTA, but can be used in simpler network environments which do not support WAP, for example.

The options which can be selected may comprise accepting or not accepting a call, or sending a message to the other communication terminal instead of establishing the call. This message may be for instance an SMS, Voice Message, an instant message, a multimedia message, a unified message or an email. By this measure, the calling or called person can choose a cheap way of transmitting a message to a second person in case the calling or called person is not willing to take over the roaming fee.

The present invention will be more readily understood with reference to the accompanying drawings in which:
Fig. 1 shows a network system in which the method of the embodiment is applicable,
Fig. 2 shows a signaling diagram illustrating a process of allowing a decision about handling a call by a calling subscriber according to the first embodiment, and
Fig. 3 shows a signaling diagram illustrating a process of allowing a decision about handling a call by a called subscriber according to the first embodiment.

In the following, a preferred embodiment of the invention are described in more detail with reference to the accompanying drawings.

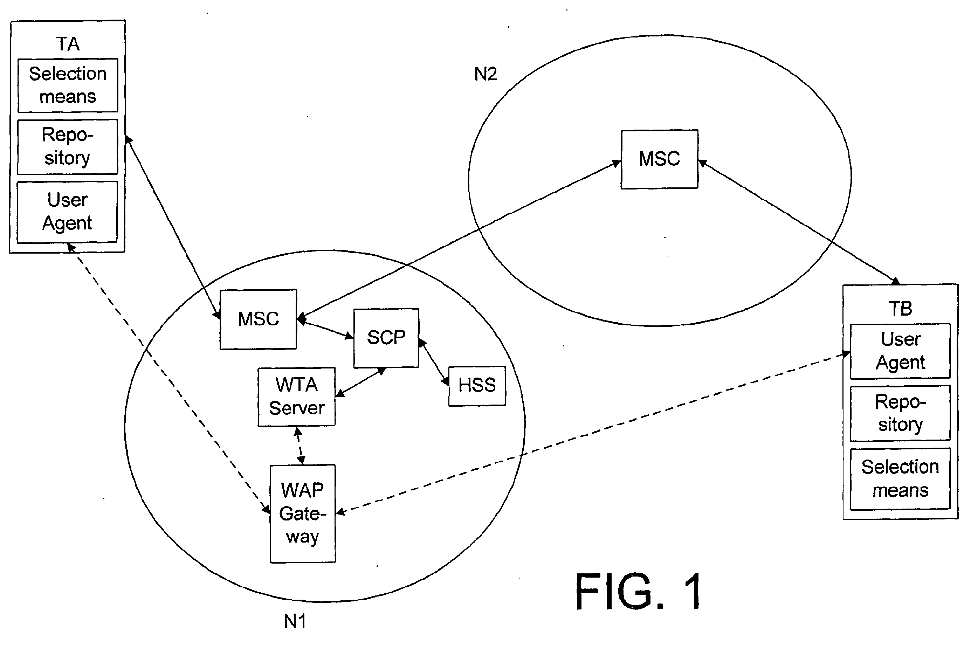

Fig. 1 shows a network system in which the method of the embodiment is applicable. It is noted that only the parts important for describing the embodiments are illustrated and that other parts are omitted for simplifying the description.

A first mobile terminal TA used by a subscriber A is located in a network N1. The mobile terminal is provided with WAP (Wireless Application Protocol) functionality. That is, it comprises a user agent and a repository. A user agent is any software or device that interprets resources. This may include textual browsers, voice browsers, search engines and the like. In the present case, the WTA (Wireless Telephony Application) functionality of WAP is important. Thus, the user agent may be a WTA User Agent which uses WTA framework. The repository is a persistent storage containing resources. The repository is used in WAP in order that particular resources (network data objects or services that can be identified by a URL) do not have to be re-loaded each time a user needs it. Due to the rather low transmission rate (e.g. 9,6 kb/s in GSM system) this would lead to very long waiting time until the user actually can input commands or the like. Hence, parts of the resources can be stored in the repository.

In addition, the mobile terminal TA comprises a selection means. This selection means is described later.

The first network N1 comprises a Mobile Switching Center MSC to which the mobile terminal TA can be connected. It is noted that this connection is provided with a radio access network, which is not illustrated. The MSC is connected to a Service Control Point SCP which coordinates and controls various call related services and functions. The SCP can access a Home Subscriber Server HSS in which data of the subscribers are stored.

Furthermore, the SCP can also access a Wireless Telephony Application (WTA) server that provides WTA services. The WAP part of the mobile terminal A is connected via a WAP gateway with the WTA server.

A second network N2 also comprises a Mobile Switching Center MSC. The WAP/WTA services, however, are provided by the first network N1 so that the second network does not have to comprise a WAP server.

In the following, it is assumed that subscriber B roams in the second network N2. It can also be assumed due to the roaming in the second network N2, not being the home network of subscriber B, extra cost will be generated for calls.

The service according to the invention can be provided as an originating service, i.e., the subscriber A who initiates the call controls the establishment of the connection. Alternatively, the service can be provided as a terminating service, wherein the called subscriber B controls the establishment of the connection. Still another alternative is that the service is provided as a combination of the two, originating and terminating services.

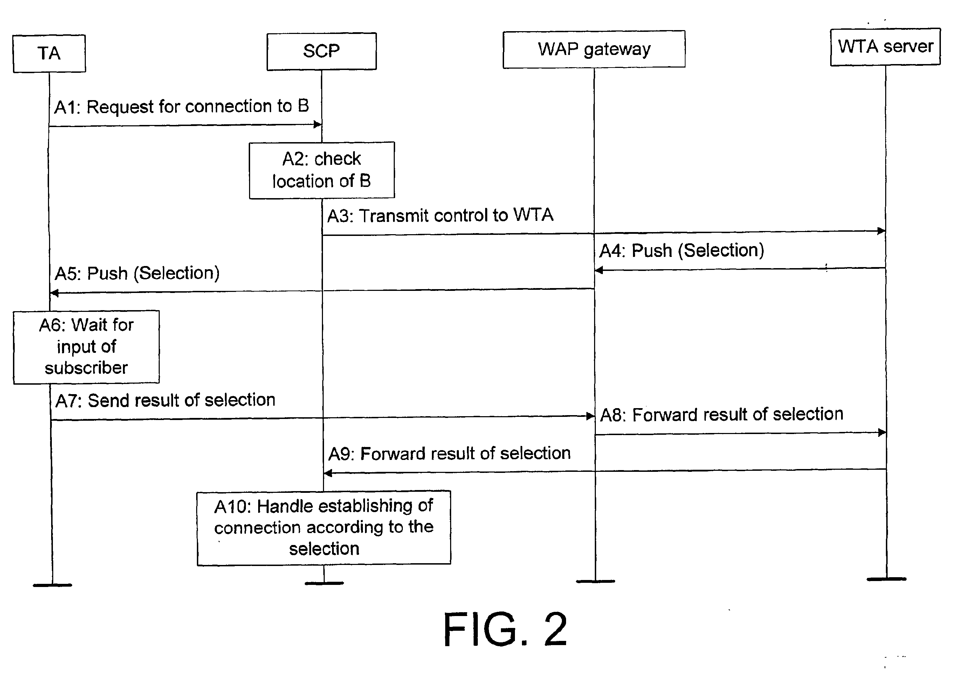

Next, by referring to the signaling diagram shown in Fig. 2, the procedure for establishing a connection between the mobile terminals TA and TB is described, wherein the service is provided as an originating service.
It is noted that only that signaling necessary to describe the present embodiment is illustrated, since otherwise the description would be too complex.

In step A1, subscriber A wants to establish a call with subscriber B. Therefor, he dials the number of B and the mobile terminal TA initiates the call by sending a connection establishment request to the SCP. At this moment, the subscriber A is not aware about the location of the subscriber B. The SCP checks the location of B in step A2. The SCP can do this by referring to the HSS which can deliver the location information regarding B. In the present case, it is assumed that the mobile terminal TB (i.e., the called subscriber) is located in the area of the network N2, is roaming.

In response to this detection, the SCP triggers the WTA functionality in the IN in step A3. That is, the SCP forwards a message the WTA server in order to inform the WTA server that A wants to establish a connection to the subscriber B which is located in another network.

Based on this information, the WTA sends a message to the mobile terminal A in order to inform the user thereof about roaming of the mobile terminal B. This can be executed in form of a WAP push message. A push message is a message which a server sends to a client without the client requesting it. That is, the server initiates the content delivery.

This push message is forwarded from the WTA server to the mobile terminal TA via the WAP gateway in steps A4 and A5.

In the present case, the push message can contain an object which allows subscriber A to make a selection between different options. This object can be a so-called card which is a single WML or WTA-WML unit of navigation and user interface. Such a card can contain information which are to be presented on the screen, instructions for gathering user input, etc. Such a card is made of WMLScript, for example.

For example, the card can offer the following options to the subscriber:
1. Connect and let the subscriber B pay for the international roaming part
2. Connect and pay for the roaming part
3. Connect to the Voice Mail of the subscriber B
4. Send an SMS to the subscriber B
5. Disconnect call

The option 1 corresponds to the current situation in GSM. In the option 2, the tariff should be displayed such that the calling subscriber A knows how much he has to pay for the call. This option may be selected by the calling subscriber A in case it is an important call and he wishes in any case that the subscriber B actually answers the call. Option 3 or option 4 may be selected in case the subscriber A only wants to notify something to subscriber B. Option 5 may be selected in case the call is useless since the called subscriber B is abroad. For example, this option may be selected in case the subscriber A would like to invite subscriber B to a meeting or the like within the next hours, which would be meaningless in case the called subscriber B is thousands of kilometers away.

The subscriber A can choose between the different options by inputting the corresponding number or by scrolling a cursor or the like.

It is noted that the above list of options can be stored in the repository of the mobile terminal TA. By this measure, it is not necessary to always load the complete card from the WTA server to the mobile terminal TA. Hence, the time for establishing a connection can be shortened.

Depending on the options, further actions can be taken in the mobile terminal TA. For example, in case the subscriber selects option 4, i.e., sending an SMS, a process for inputting a short message can be started.

The result of the selection made by the subscriber A is returned to the WTA server via the WAP gateway in steps A7 and A8. The WTA server in turn forwards the result of the selection to the SCP in step A9.

In step A10, the SCP handles the call according to the choice of the calling subscriber A. For example, the SCP generates a charging record including information how the call is paid (in options 1 and 2), establishes a connection to the Voice Mail of subscriber B (option 3) or disconnects the call (option 5).

The SMS (option 4) may be sent directly from the user's terminal using the WTAI (Wireless Telephony Application Interface) send text version, for example.

But not only the calling subscriber A may select how a call to a roaming subscriber is to be handled, also the roaming called subscriber B may select how a call is to be handled.

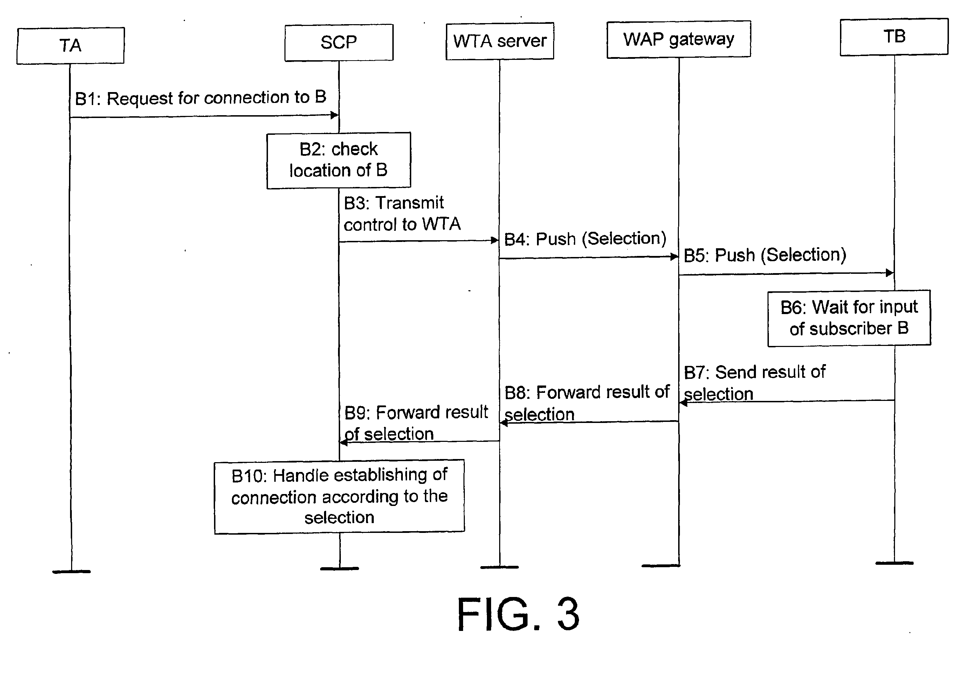

A process therefor is illustrated in the signaling diagram of Fig. 3 wherein the service is provided as a terminating service.

This process can be carried out after the process according to Fig. 2 is ended, such that both subscribers can decide how to handle establishing of the connection.

The process is similar to that of Fig. 2, therefore only the main differences are described in the following.

When a call from subscriber A to subscriber B is to be established, the first network N1 receives a corresponding request from the subscriber A. This request is handled by the IN (Intelligent Network) functionality of the first network, i.e., the SCP of the network N1.

The SCP checks the location of the called subscriber B in step B2. In case the SCP finds out that the subscriber B is located in the second network, i.e. that the subscriber A is calling the subscriber B who is roaming in the network N2, the control is transmitted to the WTA server in step B3. In turn, the WTA server forwards a WAP push message to the mobile terminal TB in steps B4 and B5, similarly to steps A4 and A5.

In step B6, the subscriber B gets information about who is calling and how subscriber A wishes to handle the call. That is, the number or the name of the caller is displayed and the tariff for the call is displayed. That is, the subscriber B gets informed whether he has to pay for it or whether the roaming fee has already been taken care of the by the subscriber A. Based on this information, he can choose whether he wishes to accept the call or not.

Furthermore, preferably the subscriber B can also select between different options as in the case of subscriber A. For example, the subscriber B can handle between the following options:
1. Accept the call
2. Disconnect the call
3. Send an SMS to subscriber A
4. Connect caller A to Voice Mail of Subscriber B
5. Connect to Voice Mail of Subscriber A.

The subscriber B may select option 3, 4 or 5 in case he does not want to answer the call at this point of time or in case he has to pay for the roaming fee but does not want to simply disconnect the call without notifying the caller.

The result of the selection is forwarded in steps B7, B8 and B9 via the WAP gateway and the WTA server to the SCP which handles the connection establishing according to the selection made by the subscriber B.

Furthermore, if an automatic call screening is invoked, the subscriber B can get the numbers from where call attempts have been made with the use of WTA notification so that he may contact the callers later.

After this, the usual call and connection control is executed. Since this is not part of the invention, a further detailed description thereof is omitted.

Nevertheless, it is noted that the charging information (i.e., who pays the roaming fee) is sent to the respective MSCs. Alternatively, the SCP may store the charging information and handle it.

Thus, according to the embodiment described above the invention is implemented as an IN/WTA server feature. The service is provisioned as a terminating service to the subscriber B, and both subscribers A and B need to have WTA capable handsets (communication terminals) in order to obtain a smooth and easy handling.

The above description and accompanying drawings only illustrate the present invention by way of example. Thus, the embodiment may vary within the scope of the attached claims.

In particular it is noted that the processes described in Figs. 2 and 3 are independent from each other.

For example, only the first selection as described in connection with Fig. 2 can be executed. That is, only subscriber A can choose whether he is prepared to take over the roaming fee or not, to send an SMS or connect to the voice mail of subscriber B and the like, whereas subscriber B may not be able to obtain information regarding the calling subscriber A. Nevertheless, at least in this case the situation of the calling subscriber A is improved as compared to the present situation described in the introductory part.

However, in this situation, the subscriber B can be informed about the fact the subscriber A pays the roaming fees of an incoming calls by announcements or SMS.

In contrast thereto, there may be the case that only the second mobile terminal TB of the second subscriber B has WAP functionality. In this case, the subscriber A will start his call without knowing that the subscriber B is roaming. However, the subscriber B can select how he wants to handle the call. That is, he can select whether he is prepared to take over the roaming fee and to answer the call, or whether he wishes to send an SMS or to connect to the Voice Mail of subscriber A or to connect subscriber A to B's own Voice Mail. Thus, also in this case the situation for the called subscriber B is improved.

Furthermore, the use of the WAP and WTA functionality was described as an example only. Also other mechanisms to inform the subscribers and the allow them to make selections are applicable. For example, the service could be implemented by Simple Retransmission Protocol (SRP) using announcements.

In addition, SMS and voice message are only given as examples for messages to inform the other user how the call is handled. Alternatively, such a message may be, for instance, an instant message, a multimedia message, a unified message or an email.

Moreover, in the cases according the above-described embodiments, it may occur that it is not possible to simultaneously carry on with call establishment and push content to the user's terminal. This may occur in early GPRS (General Packet Radio System) networks, for example. In this case, the call establishment can be stopped before information is pushed to terminal TA so that the terminal TA of the user A is not busy anymore. The pushed content, i.e. the pushed WML deck may include a URL that can be used to continue (e.g., click-to-dial). That is, the WML deck is stored in the repository such that it can later be used without the need of pushing the WML deck again from the network.

## Claims

1. A method for establishing a connection between two communication terminals, comprising the steps of
receiving a request for establishing a connection from a first communication terminal (TA) to a second communication terminal (TB), and
checking whether the second communication terminal (TB) is roaming in a second network (N2),
**characterized in that**
in case the second communication terminal (TB) is roaming, the following steps are carried out:
informing the first communication terminal (TA) that the second communication terminal (TB) is roaming in the second network, and allowing the user of the first communication terminal (TA) to select between different options how the call is to be handled by sending a push message to the first communication terminal including information for displaying the different options on a screen of the first communication terminal, for gathering the input of the user and for sending information regarding the selected options to the first network, and
controlling the establishment of a connection between the two communication terminals according to the selection of the user of the first communication terminal (TA), wherein
an option to be selected is sending a message to the second communication terminal (TB) instead of establishing the call.

2. A method for establishing a connection between two communication terminals, comprising the steps of
receiving a request for establishing a connection from a first communication terminal (TA) to a second communication terminal (TB),
checking whether the second communication terminal (TB) is roaming in the second network (N2),
**characterized in that**
in case the second communication terminal (TB) is roaming, the following steps are carried out:
informing the second communication terminal (TB) that a first communication terminal (TA) wishes to establish a connection and allowing the user (B) of the second communication terminal (TB) to select between different options how the call is to be handled by sending a push message to the second communication terminal including information for displaying the different options on a screen of the second communication terminal, for gathering the input of the user and for sending information regarding the selected options to the second network, and
controlling the establishment of a connection between the two communication terminals according to the selection of the user (B) of the second communication terminal (TB), wherein
an option to be selected is sending a message to the first communication terminal (TA) instead of accepting the call.

3. The method according to claim 1 or 2, **characterized in that** the call handling options comprises indicating of paying the cost of international roaming.

4. The method according to claim 1 or 2, **characterized in that** the checking step is performed by a Service Control Point (SCP).

5. The method according to claim 1 or 2, **characterized in that** in the informing and selecting steps are performed using Wireless Telephony Application (WTA) functionality.

6. The method according to claim 4, **characterized in that** the informing and selecting steps are controlled by a Wireless Telephony Application (WTA) server.

7. The method according to claim 1 or 2, **characterized in that** the informing and selecting steps are performed using Simple Retransmission Protocol.

8. The method according to claim 1 or 2, **characterized in that** an option to be selected is accepting or not accepting a call.

9. The method according to claim 1 or 2, **characterized in that** the message comprises at least one of the following: a SMS message, an instant message, a multimedia message, a unified message, an email and a voice message.

10. A network system comprising
a first network (N1), a second network (N2), a first communication terminal (TA) capable of being connected to the first network (N1) and a second communication terminal (TB) capable of being connected to the first or the second network (N1, N2),
wherein the first network (N1) is adapted to receive a request for establishing a connection from the first communication terminal (TA) to the second communication terminal (TB), and to check whether the second communication terminal (TB) is roaming in the second network (N2),
**characterized in that**
the first network (N1) is adapted to inform the first communication terminal (TA), in case the second communication terminal (TB) is roaming, that the second communication terminal (TB) is roaming in the second network (N2) and to allow the user (A) of the first communication terminal (TA) to select between different options how the call is to be handled by sending a push message to the first communication terminal including information for displaying the different options on a screen of the first communication terminal, for gathering the input of the user and for sending information regarding the selected options to the first network, and
to control the establishment of a connection between the two communication terminals according to the selection of the user (A) of the first communication terminal (TA), wherein
an option to be selected is sending a message to the second communication terminal (TB) instead of establishing the call.

11. A network system comprising
a first network (N1), a second network (N2), a first communication terminal (TA) capable of being connected to the first network (N1) and a second communication terminal (TB) capable of being connected to the first or the second network (N1, N2),
wherein the first network (N1) is adapted to receive a request for establishing a connection from the first communication terminal (TA) to the second communication terminal (TB), and to check whether the second communication terminal (TB) is roaming in the second network (N2),
**characterized in that**
the first network (N1) is adapted to allow the user (B) of the second communication terminal (TB), in case the second communication terminal (TB) is roaming, to select between different options how the call is to be handled by sending a push message to the second communication terminal including information for displaying the different options on a screen of the first communication terminal, for gathering the input of the user and for sending information regarding the selected options to the second network, and
to control the establishment of a connection between the two communication terminals according to the selection of the user (B) of the second communication terminal (TB), wherein
an option to be selected is sending a message to the first communication terminal (TA) instead of accepting the call.

12. The network system according to claim 10 or 11,
**characterized in that** the call handling options comprises indicating of paying the cost of international roaming.

13. The network system according to claim 10 or 11,
**characterized by** further comprising a Service Control Point (SCP) which is adapted to perform the check whether the second communication terminal is roaming.

14. The network system according to claim 10 or 11,
**characterized in that** in the informing and selecting functions are performed using Wireless Telephony Application (WTA) functionality.

15. The network system according to claim 14,
**characterized by** further comprising a Wireless Telephony Application (WTA) server which is adapted to control informing and selecting functions.

16. The network system according to claim 10 or 11,
**characterized in that** the informing and selecting functions are performed using Simple Retransmission Protocol.

17. The network system according to claim 10 or 11,
**characterized in that** an option to be selected is accepting or not accepting a call.

18. The network system according to claim 10 or 11,
**characterized in that** the message comprises at least one of the following: a SMS message, an instant message, a multimedia message, a unified message, an email and a voice message.

19. A communication terminal,
**characterized by** comprising
a selection means which is adapted to receive a push message indicating a plurality of options to handle a call when the communication terminal (TA) is calling a communication terminal (TB) and one of the communication terminals (TA, TB) is roaming, wherein the push message includes information for displaying the different options on a screen of the communication terminal, wherein
the selection means has an input means by which a user (A) of the communication terminal (TA) can select one of the options, and
the selection means is adapted to send the selected option to the network (N1) to which the communication terminal (TA) is connected, wherein
an option to be selected is sending a message to the called communication terminal (TB) instead of establishing the call.

20. The communication terminal according to claim 19,
**characterized in that** the call handling options comprises indicating of paying the cost of international roaming.

## Patentansprüche

1. Verfahren zur Herstellung einer Verbindung zwischen zwei Kommunikationsendgeräten, mit den Schritten
Empfangen einer Anforderung zur Herstellung einer Verbindung von einem ersten Kommunikationsendgerät (TA) zu einem zweiten Kommunikationsendgerät (TB), und
Prüfen, ob das zweite Kommunikationsendgerät (TB) in einem zweiten Netzwerk (N2) roamt,
**dadurch gekennzeichnet, dass**
in dem Fall, dass das zweite Kommunikationsendgerät (TB) roamt, die nachfolgenden Schritte ausgeführt werden:
Informieren des ersten Kommunikationsendgeräts (TA), dass das zweite Kommunikationsendgerät (TB) in dem zweiten Netzwerk roamt, und Zulassen, dass der Anwender des ersten Kommunikationsendgeräts (TA) zwischen unterschiedlichen Optionen wählen kann, wie der Ruf zu behandeln ist, indem eine Push-Mitteilung zu dem ersten Kommunikationsendgerät einschließlich Informationen zur Anzeige der unterschiedlichen Informationen auf einem Bildschirm des ersten Kommunikationsendgeräts, zum Erfassen der Eingabe des Anwenders und zum Senden der Information bezüglich der ausgewählten Optionen zu dem ersten Netzwerk gesendet wird, und
Steuern des Herstellens einer Verbindung zwischen den zwei Kommunikationsendgeräten entsprechend der Auswahl des Anwenders des ersten Kommunikationsendgeräts (TA), wobei
eine auszuwählende Option Senden einer Mitteilung zu dem zweiten Kommunikationsendgerät (TB) anstelle der Herstellung des Rufs ist.

2. Verfahren zur Herstellung einer Verbindung zwischen zwei Kommunikationsendgeräten, mit den Schritten
Empfangen einer Anforderung zur Herstellung einer Verbindung von einem ersten Kommunikationsendgerät (TA) zu einem zweiten Kommunikationsendgerät (TB), und
Prüfen, ob das zweite Kommunikationsendgerät (TB) in einem zweiten Netzwerk (N2) roamt,
**dadurch gekennzeichnet, dass**
in dem Fall, dass das zweite Kommunikationsendgerät (TB) roamt, die nachfolgenden Schritte ausgeführt werden:
Informieren des zweiten Kommunikationsendgeräts (TB), dass das erste Kommunikationsendgerät (TA) eine Verbindung herzustellen wünscht, und Zulassen, dass der Anwender (B) des zweiten Kommunikationsendgeräts (TB) zwischen unterschiedlichen Optionen wählen kann, wie der Ruf zu behandeln ist, indem eine Push-Mitteilung zu dem ersten Kommunikationsendgerät einschließlich Informationen zur Anzeige der unterschiedlichen Informationen auf einem Bildschirm des ersten Kommunikationsendgeräts, zum Erfassen der Eingabe des Anwenders und zum Senden der Information bezüglich der ausgewählten Optionen zu dem zweiten Netzwerk gesendet wird, und
Steuern des Herstellens einer Verbindung zwischen den zwei Kommunikationsendgeräten entsprechend der Auswahl des Anwenders (B) des zweiten Kommunikationsendgeräts (TB), wobei
eine auszuwählende Option Senden einer Mitteilung zu dem ersten Kommunikationsendgerät (TA) anstelle der Herstellung des Rufs ist.

3. Verfahren nach Anspruch 1 oder 2, **dadurch gekennzeichnet, dass** die Rufbehandlungsoptionen Angeben des Bezahlens der Kosten des internationalen Roamens aufweisen.

4. Verfahren nach Anspruch 1 oder 2, **dadurch gekennzeichnet, dass** der Prüfschritt durch einen Dienststeuerungspunkt (SCP) durchgeführt wird.

5. Verfahren nach Anspruch 1 oder 2, **dadurch gekennzeichnet, dass** die Informations- und Auswahlschritte unter Verwendung einer drahtlosen Telefonanwendungs- (WTA-) Funktionalität durchgeführt werden.

6. Verfahren nach Anspruch 4, **dadurch gekennzeichnet, dass** die Informations- und Auswahlschritte durch einen drahtlosen Telefonanwendungs- (WTA-) Server gesteuert werden.

7. Verfahren nach Anspruch 1 oder 2, **dadurch gekennzeichnet, dass** die Informations- und Auswahlschritte unter Verwendung eines Protokolls zum einfachen erneuten Senden durchgeführt werden.

8. Verfahren nach Anspruch 1 oder 2, **dadurch gekennzeichnet, dass** eine auszuwählende Option Akzeptieren oder Nicht-Akzeptieren eines Rufs ist.

9. Verfahren nach Anspruch 1 oder 2, **dadurch gekennzeichnet, dass** die Mitteilung eine SMS-Mitteilung, eine Instant-Mitteilung, eine Multimedia-Mitteilung, eine vereinheitlichte Mitteilung, eine E-Mail und/oder eine Sprachmitteilung aufweist.

10. Netzwerksystem mit
einem ersten Netzwerk (N1), einem zweiten Netzwerk (N2), einem ersten Kommunikationsendgerät (TA), das mit dem ersten Netzwerk (N1) verbunden werden kann, und einem zweiten Kommunikationsendgerät (TB), das mit dem ersten oder dem zweiten Netzwerk (N1, N2) verbunden werden kann,
wobei das erste Netzwerk (N1) eingerichtet ist, eine Anforderung zur Herstellung einer Verbindung von dem ersten Kommunikationsendgerät (TA) zu dem zweiten Kommunikationsendgerät (TB) zu empfangen und zu prüfen, ob das zweite Kommunikationsendgerät (TB) in dem zweiten Netzwerk (N2) roamt,
**dadurch gekennzeichnet, dass**
das erste Netzwerk (N1) eingerichtet ist, in dem Fall, dass das zweite Kommunikationsendgerät (TB) roamt, das erste Kommunikationsendgerät (TA) zu informieren, dass das zweite Kommunikationsendgerät (TB) in dem zweiten Netzwerk (N2) roamt, und zuzulassen, dass der Anwender des ersten Kommunikationsendgeräts (TA) zwischen unterschiedlichen Optionen wählen kann, wie der Ruf zu behandeln ist, indem eine Push-Mitteilung zu dem ersten Kommunikationsendgerät einschließlich Informationen zur Anzeige der unterschiedlichen Informationen auf einem Bildschirm des ersten Kommunikationsendgeräts, zum Erfassen der Eingabe des Anwenders und zum Senden der Information bezüglich der ausgewählten Optionen zu dem ersten Netzwerk gesendet wird, und
das Herstellen einer Verbindung zwischen den zwei Kommunikationsendgeräten entsprechend der Auswahl des Anwenders (A) des ersten Kommunikationsendgeräts (TA) zu steuern, wobei
eine auszuwählende Option Senden einer Mitteilung zu dem zweiten Kommunikationsendgerät (TB) anstelle der Herstellung des Rufs ist.

11. Netzwerksystem mit
einem ersten Netzwerk (N1), einem zweiten Netzwerk (N2), einem ersten Kommunikationsendgerät (TA), das mit dem ersten Netzwerk (N1) verbunden werden kann, und einem zweiten Kommunikationsendgerät (TB), das mit dem ersten oder dem zweiten Netzwerk (N1, N2) verbunden werden kann,
wobei das erste Netzwerk (N1) eingerichtet ist, eine Anforderung zur Herstellung einer Verbindung von dem ersten Kommunikationsendgerät (TA) zu dem zweiten Kommunikationsendgerät (TB) zu empfangen und zu prüfen, ob das zweite Kommunikationsendgerät (TB) in dem zweiten Netzwerk (N2) roamt,
**dadurch gekennzeichnet, dass**
das erste Netzwerk (N1) eingerichtet ist, zuzulassen, dass, im Falle dass das zweite Kommunikationsendgerät (TB) roamt, der Anwender (B) des zweiten Kommunikationsendgeräts (TB) zwischen unterschiedlichen Optionen wählen kann, wie der Ruf zu behandeln ist, indem eine Push-Mitteilung zu dem ersten Kommunikationsendgerät einschließlich Informationen zur Anzeige der unterschiedlichen Informationen auf einem Bildschirm des ersten Kommunikationsendgeräts, zum Erfassen der Eingabe des Anwenders und zum Senden der Information bezüglich der ausgewählten Optionen zu dem ersten Netzwerk gesendet wird, und
das Herstellen einer Verbindung zwischen den zwei Kommunikationsendgeräten entsprechend der Auswahl des Anwenders (B) des zweiten Kommunikationsendgeräts (TB) zu steuern, wobei
eine auszuwählende Option Senden einer Mitteilung zu dem ersten Kommunikationsendgerät (TA) anstelle der Herstellung des Rufs ist.

12. Netzwerksystem nach Anspruch 10 oder 11, **dadurch gekennzeichnet, dass** die Rufbehandlungsoptionen Angeben des Bezahlens der Kosten des internationalen Roamens aufweisen.

13. Netzwerksystem nach Anspruch 10 oder 11, **gekennzeichnet durch** einen Dienststeuerungspunkt (SCP), der eingerichtet ist, die Prüfung durchzuführen, ob das zweite Kommunikationsendgerät roamt.

14. Netzwerksystem nach Anspruch 10 oder 11, **dadurch gekennzeichnet, dass** die Informations- und Auswahlfunktionen unter Verwendung einer drahtlosen Telefonanwendungs- (WTA-) Funktionalität durchgeführt werden.

15. Netzwerksystem nach Anspruch 14, **gekennzeichnet durch** einen drahtlosen Telefonanwendungs- (WTA-) Server, der eingerichtet ist, die Informations- und Auswahlfunktionen zu steuern.

16. Netzwerksystem nach Anspruch 10 oder 11, **dadurch gekennzeichnet, dass** die Informations- und Auswahlfunktionen unter Verwendung eines Protokolls zum einfachen erneuten Senden durchgeführt werden.

17. Netzwerksystem nach Anspruch 10 oder 11, **dadurch gekennzeichnet, dass** eine auszuwählende Option Akzeptieren oder Nicht-Akzeptieren eines Rufs ist.

18. Netzwerksystem nach Anspruch 10 oder 11, **dadurch gekennzeichnet, dass** die Mitteilung eine SMS-Mitteilung, eine Instant-Mitteilung, eine Multimedia-Mitteilung, eine vereinheitlichte Mitteilung, eine E-Mail und/oder eine Sprachmitteilung aufweist.

19. Kommunikationsendgerät
**gekennzeichnet durch**
eine Auswahleinrichtung, die eingerichtet ist, eine Push-Mitteilung zu empfangen, die eine Vielzahl von Optionen zum Behandeln eines Rufs angibt, wenn das Kommunikationsendgerät (Ta) ein Kommunikationsendgerät (TB) ruft, und eines der beiden Kommunikationsendgeräte (TA, TB) roamt, wobei die Push-Mitteilung Information zur Anzeige der unterschiedlichen Optionen auf einem Bildschirm des Kommunikationsendgeräts aufweist, wobei
die Auswahleinrichtung eine Eingabeeinrichtung aufweist, **durch** die ein Anwender (A) des Kommunikationsendgeräts eine der Optionen auswählen kann, und
die Auswahleinrichtung eingerichtet ist, die ausgewählte Option zu dem Netzwerk (N1) zu senden, mit dem das Kommunikationsendgerät verbunden ist,
wobei eine auszuwählende Option das Senden einer Miteilung zu dem gerufenen Kommunikationsendgerät (TB) anstelle der Herstellung des Rufs ist.

20. Kommunikationsendgerät nach Anspruch 19, **dadurch gekennzeichnet, dass** die Rufbehandlungsoptionen Angeben des Bezahlens der Kosten des internationalen Roamens aufweisen.

## Revendications

1. Procédé destiné à l'établissement d'une connexion entre deux terminaux de transmission, comportant les étapes consistant à
recevoir une demande d'établissement d'une connexion d'un premier terminal de transmission (TA) à un deuxième terminal de transmission (TB), et
vérifier si le deuxième terminal de transmission (TB) est itinérant dans un deuxième réseau (N2),
**caractérisé en ce que**
au cas où le deuxième terminal de transmission (TB) serait en itinérance, les étapes suivantes sont exécutées :
informer le premier terminal de transmission (TA) que le deuxième terminal de transmission (TB) est itinérant dans le deuxième réseau, et autoriser l'utilisateur du premier terminal de transmission (TA) à choisir entre différentes options concernant la façon dont l'appel doit être traité en envoyant un message de pousser (push) au premier terminal de transmission comportant l'information afin d'afficher les différentes options sur un écran d'affichage du premier terminal de transmission, afin de recueillir l'entrée de l'utilisateur et afin de transmettre l'information concernant les options sélectionnées au premier réseau, et
commander l'établissement d'une connexion entre les deux terminaux de transmission selon le choix de l'utilisateur du premier terminal de transmission (TA), dans lequel
une option devant être sélectionnée transmet un message au deuxième terminal de transmission (TB) au lieu d'exécuter l'établissement de l'appel.

2. Procédé destiné à l'établissement d'une connexion entre deux terminaux de transmission, comportant les étapes consistant à
recevoir une demande d'établissement d'une connexion d'un premier terminal de transmission (TA) à un deuxième terminal de transmission (TB),
vérifier si le deuxième terminal de transmission (TB) est itinérant dans le deuxième réseau (N2),
**caractérisé en ce que**
au cas où le deuxième terminal de transmission (TB) serait en itinérance, les étapes suivantes sont exécutées : informer le deuxième terminal de transmission (TB) qu'un premier terminal de transmission (TA) souhaite établir une connexion et autoriser l'utilisateur (B) du deuxième terminal de transmission (TB) à choisir entre différentes options concernant la façon dont l'appel doit être traité en transmettant un message de pousser (push) au deuxième terminal de transmission comportant l'information afin d'afficher les différentes options sur un écran d'affichage du deuxième terminal de transmission, afin de recueillir l'entrée de l'utilisateur et afin de transmettre l'information concernant les options sélectionnées au deuxième réseau, et
commander l'établissement d'une connexion entre les deux terminaux de transmission selon le choix de l'utilisateur (B) du deuxième terminal de transmission (TB), dans lequel
une option devant être sélectionnée transmet un message au premier terminal de transmission (TA) au lieu d'accepter l'appel.

3. Procédé selon la revendication 1 ou 2, **caractérisé en ce que** les options de traitement d'appel comportent l'étape consistant à indiquer le paiement du coût d'itinérance internationale.

4. Procédé selon la revendication 1 ou 2, **caractérisé en ce que** l'étape de vérification est exécutée par un point de commande de services-réseau (SCP).

5. Procédé selon la revendication 1 ou 2, **caractérisé en ce que** les étapes d'information et de sélection sont exécutées au moyen d'une fonctionnalité d'application de téléphonie sans fil (WTA).

6. Procédé selon la revendication 4, **caractérisé en ce que** les étapes d'information et de sélection sont commandées par un serveur d'application de téléphonie sans fil (WTA).

7. Procédé selon la revendication 1 ou 2, **caractérisé en ce que** les étapes d'information et de sélection sont exécutées au moyen d'un protocole de retransmission unique.

8. Procédé selon la revendication 1 ou 2, **caractérisé en ce qu'**une option devant être sélectionnée accepte ou n'accepte pas un appel.

9. Procédé selon la revendication 1 ou 2, **caractérisé en ce que** le message comporte au moins un élément parmi ce qui suit : un message SMS, un message instantané, un message multimédia, un message unifié, un email et un message vocal.

10. Système de réseau
comportant un premier réseau (N1), un deuxième réseau (N2), un premier terminal de transmission (TA) en mesure d'être connecté au premier réseau (N1) et un deuxième terminal de transmission (TB) en mesure d'être connecté au premier ou au deuxième réseau (N1, N2),
dans lequel le premier réseau (N1) est adapté afin de recevoir une demande d'établissement d'une connexion du premier terminal de transmission (TA) au deuxième terminal de transmission (TB), et afin de vérifier si le deuxième terminal de transmission (TB) est itinérant dans le deuxième réseau (N2),
**caractérisé en ce que**
le premier réseau (N1) est adapté pour informer le premier terminal de transmission (TA), au cas où le deuxième terminal de transmission (TB) est itinérant, que le deuxième terminal de transmission (TB) est itinérant dans le deuxième réseau (N2) et afin d'autoriser l'utilisateur (A) du premier terminal de transmission (TA) à choisir entre différentes options concernant la façon dont l'appel doit être traité en envoyant un message de pousser (push) au premier terminal de transmission comportant l'information afin d'afficher les différentes options sur un écran d'affichage du premier terminal de transmission, afin de recueillir l'entrée de l'utilisateur et afin de transmettre l'information concernant les options sélectionnées au premier réseau, et
pour commander l'établissement d'une connexion entre les deux terminaux de transmission selon le choix de l'utilisateur (A) du premier terminal de transmission (TA), dans lequel
une option devant être sélectionnée transmet un message au deuxième terminal de transmission (TB) au lieu d'exécuter l'établissement de l'appel.

11. Système de réseau comportant
un premier réseau (N1), un deuxième réseau (N2), un premier terminal de transmission (TA) en mesure d'être connecté au premier réseau (N1) et un deuxième terminal de transmission (TB) en mesure d'être connecté au premier ou au deuxième réseau (N1, N2),
dans lequel le premier réseau (N1) est adapté afin de recevoir une demande d'établissement d'une connexion du premier terminal de transmission (TA) au deuxième terminal de transmission (TB), et afin de vérifier si le deuxième terminal de transmission (TB) est itinérant dans le deuxième réseau (N2),
**caractérisé en ce que**
le premier réseau (N1) est adapté afin d'autoriser l'utilisateur (B) du deuxième terminal de transmission (TB), au cas où le deuxième terminal de transmission (TB) est itinérant, afin de choisir entre différentes options concernant la façon dont l'appel doit être traité en envoyant un message de pousser (push) au deuxième terminal de transmission comportant l'information afin d'afficher les différentes options sur un écran d'affichage du premier terminal de transmission, afin de recueillir l'entrée de l'utilisateur et afin de transmettre l'information concernant les options sélectionnées au deuxième réseau, et
afin de commander l'établissement d'une connexion entre les deux terminaux de transmission selon le choix de l'utilisateur (B) du deuxième terminal de transmission (TB), dans lequel
une option devant être sélectionnée transmet un message au premier terminal de transmission (TA) au lieu d'accepter l'appel.

12. Système de réseau selon la revendication 10 ou 11, **caractérisé en ce que** les options de traitement d'appel comportent l'étape consistant à indiquer le paiement du coût d' itinérance internationale.

13. Système de réseau selon la revendication 10 ou 11, **caractérisé en ce qu'**il comporte en outre un point de commande de services-réseau (SCP) qui est adapté afin d'exécuter la vérification consistant à déterminer si le deuxième terminal de transmission est itinérant.

14. Système de réseau selon la revendication 10 ou 11, **caractérisé en ce que** les fonctions d'information et de sélections sont exécutées au moyen d'une fonctionnalité d'application de téléphonie sans fil (WTA).

15. Système de réseau selon la revendication 14, **caractérisé en ce qu'**il comporte en outre un serveur d'application de téléphonie sans fil (WTA) qui est adapté à la commande des fonctions d'information et de sélection.

16. Système de réseau selon la revendication 10 ou 11, **caractérisé en ce que** les fonctions d'information et de sélection sont exécutées au moyen d'un protocole de retransmission unique.

17. Système de réseau selon la revendication 10 ou 11, **caractérisé en ce qu'**une option devant être sélectionnée consiste à accepter ou à ne pas accepter un appel.

18. Système de réseau selon la revendication 10 ou 11, **caractérisé en ce que** le message comporte au moins un élément parmi ce qui suit : un message SMS, un message instantané, un message multimédia, un message unifié, un email et un message vocal.

19. Terminal de transmission, **caractérisé en ce qu'**il comporte
un moyen de sélection qui est adapté afin de recevoir un message de pousser (push) indiquant une pluralité d'options afin de traiter un appel lorsque le terminal de transmission (TA) appelle un terminal de transmission (TB) et qu'un des terminaux de transmission (TA, TB) est itinérant, dans lequel le message de pousser (push) inclut l'information afin d'afficher les différentes options sur un écran d'affichage du terminal de transmission, dans lequel
le moyen de sélection présente un moyen d'entrée par lequel un utilisateur (A) du terminal de transmission (TA) peut choisir une des options, et
le moyen de sélection est adapté afin de transmettre l'option sélectionnée au réseau (N1) auquel le terminal de transmission (TA) est connecté, dans lequel
une option devant être sélectionnée transmet un message au terminal de transmission appelé (TB) au lieu d'exécuter l'établissement de l'appel.

20. Terminal de transmission selon la revendication 19, **caractérisé en ce que** les options de traitement d'appel comportent l'étape consistant à indiquer le paiement du coût d'itinérance internationale.
